# EUROPÄISCHE PATENTSCHRIFT

(11) **EP 2 610 043 B1**
(45) Veröffentlichungstag und Bekanntmachung des Hinweises auf die Patenterteilung: **18.09.2019**
(21) Anmeldenummer: 12189891.0
(22) Anmeldetag: 25.10.2012
(51) Int. Cl.: B29C 44/58, B29C 44/34, E04B 1/80

(54) **Schäumvorrichtung und Verfahren zur Herstellung von Dämmplatten**
Foaming device and method for producing insulation panels
Dispositif de moussage et procédé destiné à la fabrication de plaques isolantes

(30) Priorität: 29.12.2011 DE 202011109599 U
(43) Veröffentlichungstag der Anmeldung: 03.07.2013
(73) Patentinhaber: Kurtz GmbH, 97892 Kreuzwertheim (DE)
(72) Erfinder: Kurtz, Walter, 97907 Hasloch (DE)
(74) Vertreter: HGF Europe LLP

(56) Entgegenhaltungen:
- EP-A1- 0 671 250
- CH-A5- 676 446
- DE-A1- 3 526 949
- GB-A- 1 135 110
- GB-A- 2 187 996

## Beschreibung

Die Erfindung betrifft eine Vorrichtung und ein Verfahren zur Herstellung von geschäumten Dämmplatten mit einer von Formplatten und Formrahmen umgebenen Schäumform gemäß dem Oberbegriff des Anspruchs 1 bzw. des Anspruchs 15. Solche Vorrichtungen und Verfahren sind aus CH 676 446 A bekannt.

Schäumvorrichtungen zur Herstellung von Dämmplatten sind in vielfältiger Art aus dem Stand der Technik bekannt. In einfacher Art werden diese mitunter durch ein Schneiden eines größeren Blockes in eine Mehrzahl an einzelnen Dämmplatten hergestellt. Die Herstellung von Fassendendämmplatten erfolgt jedoch in aller Regel im Einzelverfahren. Hierbei wird in einer Schäumform ein loses Kunststoffmaterial eingefüllt, welches nachfolgend Bedampft und Stabilisiert wird. Hierdurch entsteht die entsprechende Dämmplatte. Diese weist hierbei die Gestalt der von der Schäumvorrichtung definierten Schäumform auf. Gebildet wird die Schäumform hierbei in üblicher Weise von zwei gegenüberliegenden Formplatten, wobei der umlaufende Rand der Schäumform weiterhin von einem Formrahmen umgeben ist. Zur Befüllung sowie insbesondere zur Entnahme der hergestellten Dämmplatte ist üblicherweise die Entfernbarkeit einer der beiden Formplatten als Deckel vorgesehen, während hingegen die andere Formplatte den Boden der Schäumform bildet. Unerheblich ist es sowohl für den Stand der Technik, als auch für die erfindungsgemäße Ausführungsform, ob der Deckel vollständig entfernbar, schwenkbar oder andersartig verstellbar ist. Zumindest bedarf es der Entnehmbarkeit der hergestellten Dämmplatte aus der Schäumform.

Weiterhin ist es aus dem Stand der Technik, beispielsweise der EP 0 671 250 A1, bekannt, dass eine der beiden Formplatten, in aller Regel die Boden-Formplatte, mittels eines Antriebes verstellbar ist. Hierdurch wird eine Variation der Stärke der Dämmplatte ermöglicht. Somit kann bei einem Chargenwechsel eine Verstellung der Boden-Formplatte erfolgen, so dass im Folgenden Dämmplatten einer anderen Stärke als zuvor hergestellte Dämmplatten produziert werden können.

Wenngleich mit bekannten Schäumvorrichtungen zufriedenstellende Ergebnisse hinsichtlich der geforderten Dämmplatten erreicht werden, so ermöglicht das zur Herstellung der Dämmplatten verwendete Material bessere Materialeigenschaften als diese bei den regulär hergestellten Dämmplatten verwirklicht werden. Dies betrifft insbesondere die Druck- und Biegefestigkeit sowie die Schlagzähigkeit.

Hierzu ist aus der Druckschrift GB 2,187,996 A ein Verfahren bekannt, bei dem während der Herstellung der Dämmplatte der Druck in der Schäumform durch Verstellung einer der beiden Formplatten erhöht wird.

Die Komprimierung des in der Schäumform eingefüllten Materials während des Herstellungsvorgangs wird ebenso in der GB 1,135,110 A offenbart, wobei entgegen vorheriger Lösung zum einen beide Formplatten bewegt werden können und zum anderen mittels des zum Pressen erforderlichen Antriebs zugleich auch eine Einstellung der Nennweite der Formplatten vorgenommen werden kann.

Vorteilhafte Festigkeitswerte werden mit einer Schäumvorrichtung gemäß der Schrift CH 676 446 A5 erzielt. Zunächst einmal ist vergleichbar vorherigen Lösungen eine Formplatte mittels eines Antriebs verstellbar. Zur Erhöhung der Festigkeitswerte erfolgt während des Herstellungszyklus eine Pressung der in Herstellung befindlichen Dämmplatte. Wenngleich mit vorheriger Lösung bereits bessere Festigkeitswerte erzielt werden, weisen diese Ausführungsformen jedoch entweder den Nachteil des hohen Aufwandes für den Antrieb hinsichtlich erforderlicher Geschwindigkeiten sowie für die Positionsgenauigkeit oder den Nachteil einer unzureichenden Genauigkeit hinsichtlich der Stärke der hergestellten Dämmplatten auf.

Aufgabe der vorliegenden Erfindung ist es daher, eine Vorrichtung zur Herstellung von Dämmplatten zur Verfügung zu stellen, bei der die unterschiedlichen Geschwindigkeiten und gewünschten Genauigkeiten zur Einstellung der Nennweite zwischen den Formplatten und der Bewegung zur Pressung der Formplatte Berücksichtigung finden und mittels derer nochmals verbesserte Materialeigenschaften bei im Einzelverfahren hergestellten Dämmplatten erreicht werden.

Die gestellte Aufgabe wird durch eine erfindungsgemäße Ausführungsform nach dem Anspruch 1 gelöst. Ein erfindungsgemäßes Verfahren zur Herstellung entsprechender Dämmplatten ist im Anspruch 15 angegeben.

Vorteilhafte Ausführungsformen sind Gegenstand der Unteransprüche. Die gattungsgemäße Vorrichtung ist zunächst einmal bestimmt zur Herstellung von geschäumten Dämmplatten. Wenngleich es theoretisch denkbar wäre, mittels der Vorrichtung einen größeren Block herzustellen, um diesen sodann in Scheiben oder Stücken zu unterteilen unter Bildung einer Mehrzahl von Dämmplatten, so ist in aller Regel davon auszugehen, dass jeweils eine singuläre Dämmplatte in einem Herstellungsprozess hergestellt wird. Diese hergestellten Dämmplatten finden insbesondere als Fassadendämmplatten in der Gebäudeisolierung Verwendung.

Erforderlich ist diesbezüglich zunächst einmal eine Schäumform, welche hierbei hinsichtlich deren Geometrie der Formgebung der herzustellenden Dämmplatte entspricht. Insofern stellt die Schäumform in der Vorrichtung eine Art Kavität dar, innerhalb derer die Herstellung der Dämmplatte durchgeführt wird. Die Schäumform wird hierbei definiert durch zwei gegenüberliegende Formplatten sowie einen umgebenden Formrahmen. Eine der Formplatten bildet hierbei einen Boden, wobei die entsprechend gegenüberliegende Formplatte einen Deckel bildet. Zwischen den Formplatten entsteht ein freier Abstand, welcher folglich die Dicke der Schäumform bzw. die Dicke der herzustellenden Dämmplatten definiert. Umgebend wird der Freiraum zwischen den beiden Formplatten, d.h. die Schäumform, von einem Formrahmen umschlossen, wobei es zunächst unerheblich ist, ob dieser Formrahmen ebenso die Formplatten bzw. eine der Formplatten umschließt oder lediglich den Abstand zwischen den beiden Formplatten überbrückt. Zumindest wird von den Formplatten sowie dem Formrahmen eine entsprechend im Wesentlichen geschlossene Schäumform gebildet.

Unerheblich ist es zunächst, welche Zuordnung zwischen der Boden-Formplatte bzw. der Deckel-Formplatte und dem Formrahmen gegeben ist. In der regulären Ausführungsform ist jedoch zumindest die Deckel-Formplatte vom Formrahmen entfernbar zur Entnahme der hergestellten Dämmplatte. Gleichfalls, wie im Stand der Technik, ist es hierbei unerheblich, auf welche Weise die Entfernung der Deckel-Formplatte vom Formrahmen erfolgt, wobei insbesondere eine schwenkbar angebundene Lösung besonders bevorzugt wird.

Wenngleich in aller Regel die Deckel-Formplatte im Formrahmen eintaucht bzw. darauf aufliegt, ist es für die gattungsgemäße Ausführung unerheblich, wenn der Formrahmen mehrteilig ausgeführt ist und hierbei ein deckelseitiger Abschnitt des Formrahmens mit der Deckel-Formplatte fest verbunden ist oder die Deckel-Formplatte einstückig einen Abschnitt des Formrahmens umfasst. Diese Betrachtung wird im Weiteren vernachlässigt, kann jedoch für den Fachmann ohne weiters alternativ hinzu gefügt werden. Zumindest ist vorgesehen, dass bei Entfernung der Deckel-Formplatte mit oder ohne Abschnitt des Formrahmens die Dämmplatte auf dieser Seite entnehmbar oder auswerfbar ist. In diesem Sinne umfasst im Folgenden der Begriff "Deckel-Formplatte" ebenso einen - sofern derart ausgeführt - deckelseitigen Abschnitt des Formrahmens.

Die Boden-Formplatte ist hingegen in aller Regel nicht derart vom Formrahmen entfernbar, dass auf dieser Seite gleichfalls eine Entnahme der Dämmplatte möglich wäre. Jedoch ist es auch in diesem Falle zunächst unerheblich, ob die Boden-Formplatte fest mit dem Formrahmen verbunden ist und insofern beispielsweise einstückig ausgeführt ist, oder ob hingegen die Boden-Formplatte relativ zum Formrahmen verstellbar ist.

Weiterhin ist gattungsgemäß vorgesehen, dass die Vorrichtung eine Verstellvorrichtung aufweist. Hierbei umfasst die Verstellvorrichtung zumindest einen Verstellantrieb, mittels dessen ein Nennabstand der beiden Formplatten einstellbar ist. Hierbei bezieht sich der Nennabstand auf denjenigen Abstand zwischen der Boden-Formplatte und der Deckel-Formplatte, welcher vorliegt ohne Einsatz der Pressvorrichtung. Diesbezüglich bedarf es einer Verstellbarkeit zumindest einer der beiden Formplatten relativ zur gegenüberliegenden Formplatte mittels des Verstellantriebes. Hierbei ist es zunächst unerheblich, ob die Boden-Formplatte oder die Deckel-Formplatte mittels einer Verstellvorrichtung verstellbar sind. In aller Regel ist jedoch davon auszugehen, dass eine der beiden Formplatten mittels des Verstellantriebs verstellbar ist und hierbei zugleich sich relativ zum Formrahmen bewegt. Maßgeblich ist zumindest, dass durch die Verstellung einer Formplatte unter Änderung des Nennabstands entsprechende Dämmplatten mit unterschiedlichen Materialstärken gebildet werden können.

Zur Verbesserung der Materialeigenschaften der hergestellten Dämmplatte wird erfindungsgemäß nunmehr eine Pressvorrichtung eingesetzt.

Diese umfasst hierbei zumindest einen Pressantrieb, welcher während des Herstellungszyklus einer Dämmplatte eine Änderung des Abstandes der beiden Formplatten bewirken kann. Hierbei ist vorgesehen, dass der Pressantrieb eine reversierende Bewegung vollzieht und insofern die Änderung des Abstands der beiden Formplatten bzw. somit die Dicke der Schäumform gleichfalls einer reversiblen Änderung unterliegt. Folglich erfolgt bei Einsatz der Pressvorrichtung eine Pressung der Dämmplatte mit nachfolgendem Entspannen.

Durch die während der Herstellung der Dämmplatten durchgeführte Materialstauchung und -entspannung wird eine Steigerung der Materialeigenschaften der hergestellten Dämmplatte erreicht. Dies betrifft insbesondere eine Steigerung der Festigkeit der hergestellten Dämmplatte als auch zugleich deren Schlagfestigkeit erhöht werden kann. Insofern werden durch diese erfindungsgemäße Ausführungsform höhere Materialeigenschaften als bisher üblich erreicht. Somit wird eine deutlich verbesserte Ausnutzung des eingebrachten Materials erreicht, ohne dass hierbei nachteilige Folgen hinsichtlich der Dämmeigenschaften, insbesondere zur Gebäudeisolierung, zu befürchten sind.

In der Verwendung der erfindungsgemäßen Vorrichtung vollzieht zumindest eine Formplatte unter Einsatz der Pressvorrichtung einen Hub unter Änderung des Abstandes zwischen den beiden Formplatten ausgehend von einem Nennabstand hin zu einem um den Hub reduzierten Abstand. Besonders vorteilhaft ist es hierbei, wenn dieser vom Pressantrieb ermöglichte Hub veränderbar und insofern einstellbar ist. Hierdurch wird es insbesondere ermöglicht, die Qualitätseigenschaften durch Einflussnahme auf den Hub ebenso positiv beeinflussen zu können. Weiterhin kann durch die Veränderung des Hubes dem Umstand Rechnung getragen werden, dass gegebenenfalls verschiedene Materialien zum Einsatz kommen oder ein unterschiedlicher Nennabstand zwischen den Formplatten vorliegt.

Weiterhin ist erfindungsgemäß vorgesehen, dass eine der beiden Formplatten relativ zum Formrahmen im Wesentlichen stehend angeordnet ist und die gegenüberliegende Formplatte durch den Press- und den Verstellantrieb bewegbar ist. Insofern erfolgt die Pressung der herzustellenden Dämmplatte unter Bewegung der entsprechenden anderen Formplatte, wobei diese hierzu bevorzugt sich innerhalb des Formrahmens befindet, das heißt der Formrahmen umgibt neben der Schäumform zudem ebenso die bewegte Formplatte.

Hierbei ist es zunächst unerheblich, wie die Relativzuordnung der bewegten Formplatte zum Formrahmen erfolgt. Zum einen ist es diesbezüglich möglich, die bewegte Formplatte im Formrahmen derart zu lagern, dass eine Gleitbewegung der bewegten Formplatte im Formrahmen erfolgt. Gleichfalls kann eine Rollen- oder Kugellagerung der bewegten Formplatte im Formrahmen vorgesehen sein. Wesentlich ist zumindest, dass der durchgeführte Pressvorgang bei Herstellung der Dämmplatten zu keiner nennenswerten Beschädigung der Formplatte bzw. des Formrahmens aufgrund der Relativbewegung führt. Alternativ oder ergänzend ist es ebenso möglich, einen zulässigen Spalt zwischen Formplatte und Formrahmen vorzusehen, wobei die Formplatte über anderweitige Führungen derart geführt wird, dass keine Anlage der Formplatte am Formrahmen zu befürchten ist. Hierbei können beispielsweise Säulenführungen zwischen einem Anbauteil an der Formplatte und einem Anbauteil des Formrahmens vorgesehen sein. Hierbei kann zur Abdichtung des Spaltes gleichfalls eine Gleitdichtung angeordnet werden.

Besonders vorteilhaft in der Anwendung einer Verstellvorrichtung in Ergänzung zur Pressvorrichtung ist es, wenn der Verstellantrieb derart angeordnet ist, dass sich dieser funktionell in einer Reihe mit dem Pressantrieb befindet. Das bedeutet, dass bei einer Verstellung der Formplatte mittels des Verstellantriebs zugleich der Pressantrieb der Pressvorrichtung verfahren wird. Dies erfolgt beispielsweise indem der Verstellantrieb zunächst einmal den gesamten Pressantrieb verfährt, an welchem wiederum die bewegte Formplatte angebunden ist. Aufgrund der verwendungsbestimmten Aufgabe des Pressantriebes muss dieser einen kurzzeitigen reversiblen Hub realisieren, hingegen dient der Verstellantrieb zur Anpassung des Nennabstandes zwischen den beiden Formplatten. Diese Ausführungsform ist dahingehend besonders vorteilhaft, dass trotz des Vorhandenseins zweier getrennter Antriebe lediglich eine Formplatte im Formrahmen verschiebbar ausgeführt sein muss, während hingegen die andere Formplatte zumindest für die Dauer des jeweiligen Herstellungsprozesses der Dämmplatten feststehend zum Formrahmen positioniert sein kann. Hierbei ist mit feststehend nicht zwingend gemeint, dass es sich hierbei um die Boden-Formplatte handelt. Vielmehr bildet hingegen in vorteilhafter Weise die Deckel-Formplatte die entsprechend stehend angeordnete Formplatte, welche insofern zur Entnahme der Dämmplatte aus der Schäumform entfernt werden kann. Weiterhin gestaltet sich diese Anordnung des Pressantriebs in Reihenschaltung zwischen der bewegten Formplatte sowie dem Verstellantrieb dahingehend als vorteilhaft, dass der Einsatz des Pressantriebes, welcher bei der Herstellung einer jeden Formplatte zum Einsatz kommen wird, lediglich zur Verstellung der Formplatte führt, während hingegen der Einsatz des Verstellantriebs zum Chargenwechsel unproblematisch ebenso mit einer Verstellung des Pressantriebes verbunden werden kann.

Zur wirkungsvollen und zuverlässigen Realisierung des Pressantriebs zur Erzeugung entsprechenden Hubes ist es besonders vorteilhaft, wenn eine Kniehebelmechanik zum Einsatz kommt. Insofern bedarf es zur Erzeugung des Hubes lediglich eines Schwenkens bzw. einer Rotation eines Pleuels der Kniehebelmechanik, wodurch ein entsprechender Vorschub und Rückzug unter Verschiebung der entsprechenden Formplatte hervorgerufen werden kann. Hierbei kann sowohl vorgesehen sein, dass nur ein begrenzter Winkel des entsprechenden rotatorisch gelagerten Pleuels für den Hub genutzt wird, wobei es jedoch besonders vorteilhaft ist, wenn mit einem Hub des Pressantriebs das entsprechende Pleuel der Kniehebelmechanik jeweils eine volle Rotation vollzieht.

In Abhängigkeit von den erforderlichen Drücken sowie in Abhängigkeit von den erforderlichen Geschwindigkeiten ist es ebenso alternativ vorteilhaft, als Pressantrieb einen Hydraulikzylinder einzusetzen. Hierbei kann ebenso vorgesehen sein, dass der Pressantrieb einen konstanten Hub unter Ausnutzung des gesamten Stellweges des Hydraulikzylinders vollzieht, wobei es in diesem Ausführungsbeispiel besonders vorteilhaft ist, den Hydraulikzylinder zugleich derart zu steuern, dass ein für die jeweilig herzustellende Dämmplatte optimaler Hub durchgeführt wird. Insofern ist es im Einsatz eines Hydraulikzylinders nicht erforderlich, jeweils bis zu dessen Endstellung zu verfahren, sondern vielmehr kann innerhalb des Stellbereichs des Hydraulikzylinders der Hub beliebig gewählt werden und insofern hinsichtlich der optimalen Pressung ausgerichtet sein.

Zur Realisierung des entsprechenden Verstellantriebs stehen verschiedene Ausführungsformen zur Verfügung, wobei insbesondere die Ausführung mit einem Spindelmotor als Verstellantrieb bevorzugt zum Einsatz kommen kann, wobei eine Gewindespindel des Spindelmotors ein- und ausgefahren werden kann. Entsprechend der Notwendigkeit, die Änderung des Nennabstands jeweils nur zur Chargenänderung durchzuführen, ist insofern eine langsame Bewegung hinreichend, während hierbei eine präzise Einstellung des Nennabstandes bevorzugt wird. Entsprechendes wird durch den Spindelantrieb besonders begünstigt.

Alternativ zur Anordnung zweier getrennter Antriebe als Verstellantrieb und als Pressantrieb ist es weiterhin alternativ möglich, den Pressantrieb zugleich als Verstellantrieb auszuführen. Somit gibt es lediglich einen Antrieb, welcher zugleich zur Einstellung des Nennabstandes als auch zur Realisierung des geforderten Hubes zum Einsatz kommen kann. Diesbezüglich ist insbesondere der Einsatz von Hydraulikzylindern vorteilhaft, wobei in diesem Falle der gesamte Stellweg des Hydraulikzylinders dem Verstellbereich des Verstellantriebs plus den vorgesehenen Hub entspricht, während hingegen der im Zyklus zum Einsatz kommende Hub einen Teil des Verstellbereichs des Hydraulikzylinders einnimmt.

Beim Einsatz einer Verstellvorrichtung in Ergänzung zur erfindungsgemäßen Pressvorrichtung kann es ebenso vorteilhaft sein, wenn eine der beiden Formplatten durch den Verstellantrieb und die gegenüberliegende zweite Formplatte durch den Pressantrieb bewegt wird. Dies kann dahingehend vorteilhaft sein, als dass die für die Pressbewegung gewählte Formplatte insbesondere hinsichtlich deren schnellen Bewegung bei kurzem Hub ausgelegt wird, während hingegen die andere Formplatte eine lediglich langsame Bewegung vollziehen muss. Ebenso stellt sich bei dieser Ausführungsform nicht die Problematik der Kopplung oder Zuordnung von Pressantrieb und Verstellantrieb zur Verstellung derselben Formplatte, da vielmehr jeder Antrieb an einer Formplatte angreift.

Bei der Auslegung der Vorrichtung unter Ergänzung der Pressvorrichtung mit einer separaten Verstellvorrichtung mit insofern einem Pressantrieb und einem Verstellantrieb ist es besonders vorteilhaft, wenn der vom Pressantrieb durchführbare Hub durch den gleichzeitigen Einsatz des Verstellantriebs variiert werden kann. Das heißt, dass bei dem zyklischen Einsatz des Pressantriebs zugleich der Verstellantrieb zum Einsatz kommen kann, wobei in aller Regel der Pressantrieb eine wesentlich höhere Arbeitsgeschwindigkeit aufweisen wird als der Verstellantrieb. Nichts desto trotz kann mit dem Verstellantrieb wirkungsvoll eine Variation des Hubes erzielt werden kann. Dies bietet sich insbesondere an beim Einsatz eines Pressantriebes mit einem fixen Hub, beispielsweise durch Einsatz einer Kniehebelmechanik. Beispielsweise kann zur Vergrößerung des mit dem Pressantrieb verbundenen fixen Hubes der Verstellantrieb gleichgerichtet betrieben werden, womit eine Reduzierung des minimalen Abstandes zwischen den Formplatten erreicht wird, während hingegen zur Reduzierung des Hubes der Verstellantrieb gegenläufig zum Pressantrieb zum Einsatz kommen kann.

Aufgrund der vorteilhaften Kinematik der von der Pressvorrichtung realisierten Bewegung der Formplatte ist es besonders vorteilhaft, wenn bei geöffneter Vorrichtung, das heißt bei entfernter Deckel-Formplatte, die Pressvorrichtung zugleich als Auswerfer Verwendung findet. Hierbei wird die Boden-Formplatte als bewegte Formplatte vom Pressantrieb zum Auswerfen der geschäumten Dämmplatte gleichfalls mit einer Hubbewegung vor- und zurückgefahren. Besonders vorteilhaft ist diese Ausführung in dem Falle, wenn ein freies Herabfallen der hergestellten Dämmplatte aus der Vorrichtung zulässig ist und es insofern keiner direkten Übernahme der hergestellten Dämmplatte mittels eines Greifers aus der Schäumform bedarf. Zur Vermeidung von Stoßschäden durch ein Herabfallen der geschäumten Dämmplatte kann beispielsweise hier ein schräg angeordnetes Förderband zum Einsatz kommen.

Weiterhin ist es vorteilhaft, wenn die Dämmplatte mit einem Stufenabsatz versehen werden kann. Diesbezüglich bedarf es in vorteilhafter Weise am Formrahmen oder an der Boden-Formplatte an einer Seite bzw. an zwei angrenzenden Seiten der Schäumform eines Stufenabsatzes. Hierzu komplementär weist die Deckel-Formplatte auf der gegenüberliegenden Seite bzw. den gegenüberliegenden Seiten der Schäumform einen komplementären Stufenabsatz auf. Dies begünstigt insbesondere die spätere Verwendung der Dämmplatten zur Fügung derselben ohne Entstehung eines durchgehenden Spaltes zwischen den einzelnen Dämmplatten.

Hierbei ist es besonders vorteilhaft, wenn die Höhe des Stufenabsatzes, das heißt in Richtung des betrachteten Abstandes zwischen den beiden Formplatten, veränderbar ist. Dies gilt insbesondere unter Berücksichtigung des Einsatzes einer Verstellvorrichtung zur Änderung des Nennabstandes.

Weiterhin ist es besonders vorteilhaft zur Verwendung der geschäumten Dämmplatten zur Gebäudeisolierung, wenn zumindest eine der beiden Formplatten auf der zur Schäumform weisenden Seite eine erhabene und/oder vertiefte Struktur aufweist. Hierbei wird beim Schäumen der entsprechenden Dämmplatten eine komplementäre Struktur in den hergestellten Dämmplatten abgebildet. Die Ausführung der Struktur ist hierbei zunächst unerheblich, wobei sich diese nach der geforderten Verwendung ausrichten kann.

In besonders vorteilhafter Weise ist die Struktur derart ausgebildet, dass in der hergestellten Dämmplatte eine Oberfläche mit deutlich erhöhter Rauhigkeit entsteht. Hierbei ist die gebildete Oberfläche der Dämmplatte zumindest doppelt so groß wie die aus den Abmessungen der Formplatte resultierende Fläche. Insbesondere in der Verwendung zur Fassadendämmung wird somit eine deutlich bessere Haftung von sowohl Kleber als auch Putz an der entsprechenden Dämmplatte aufgrund der mehr als doppelt so großen Kontaktfläche gewährleistet.

Weiterhin wird in vorteilhafter Weise auf der Oberfläche der Dämmplatte auf zumindest einer Seite ein maßstäbliches, insbesondere vertieftes, Linienraster abgebildet. Entsprechend bedarf es bei der zugehörigen Formplatte einer erhabenen Linienstruktur. Die maßstäbliche Ausführung des Linienrasters begünstigt die schnelle und unkomplizierte Konfektionierung einer Dämmplatte zum Anschluss an entsprechenden Bruchteilen von Dämmplatten beispielsweise am Ende einer zu dämmenden Gebäudefläche.

Hinsichtlich der Verwendung als Fassadendämmplatte ist es weiterhin vorteilhaft, wenn die Struktur auf den Oberflächen der beiden Formplatten unterschiedlich gewählt ist, so dass den unterschiedlichen Anforderungen hinsichtlich der Anbringung der Dämmplatten auf verschiedenen Oberflächen Rechnung getragen wird. Somit kann beispielsweise eine Oberfläche der Dämmplatte ausgelegt sein zur Anbringung eines Klebers, wobei die andere Seite der Dämmplatte zur Aufbringung von Putz optimiert ist.

In Ergänzung zur Ausführung einer erfindungsgemäßen Vorrichtung wird weiterhin ein erfindungsgemäßes Verfahren vorgeschlagen, bei welchem zunächst einmal eine Schäumvorrichtung erforderlich ist. Hierbei bedarf es zunächst einmal der Schäumform, gebildet von einer den Boden bildenden Formplatte, einer gegenüberliegenden den Deckel bildenden Formplatte sowie einem die Schäumform umschließenden Formrahmen. Gattungsgemäß erfolgt die Herstellung der entsprechenden Formplatten mittels Einfüllen von aufgeschäumtem losem Kunststoffmaterial in die Schäumform, wobei nachfolgend ein Bedampfen des eingefüllten Kunststoffmaterials unter Verbindung des zuvor losen Kunststoffmaterials zu einem Körper erfolgt. Durch das nachfolgende Stabilisieren des bedampften Kunststoffmaterials unter Anlegung eines Vakuums mit Absaugung von Dampf und/oder Luft wird die entsprechende Dämmplatte gebildet.

Erfindungsgemäß wird dieses Herstellungsverfahren nunmehr um einen alternierenden Press- und Entspannvorgang ergänzt. Hierbei setzt der Pressvorgang während oder nach dem Bedampfen ein, wobei entsprechendes Entspannen zumindest während des Stabilisierens abgeschlossen ist. Hierzu umfasst die Schäumvorrichtung eine Pressvorrichtung mit zumindest einem Pressantrieb, wobei nach dem Beginn oder Abschluss des Bedampfens und/oder während des Stabilisierens mittels des Pressantriebs mindestens eine der Formplatte unter Änderung des relativen Abstands der beiden Formplatten reversierend bewegt wird, wobei ein alternierendes Pressen und Entspannen des Kunststoffmaterials erfolgt, wobei eine der beiden Formplatten relativ zum Formrahmen stehend angeordnet ist und die gegenüberliegende Formplatte durch den Press- und den Verstellantrieb bewegt wird.

Durch diese Anwendung eines Press- und Entspannvorgangs wird die Festigkeit des Materials der hergestellten Dämmplatten positiv beeinflusst und insofern sind verbesserte Materialwerte der hergestellten Dämmplatten im Gegensatz zu üblichen Dämmplatten ermöglicht. Besonders vorteilhaft ist es, wenn der Pressvorgang derart durchgeführt wird, dass das Minimum der Dicke der Schäumform nach dem Bedampfen, das heißt während des Stabilisierens, erreicht wird. Insbesondere bei dieser Verfahrensweise wird eine besonders positive Beeinflussung der Materialeigenschaften gewährleistet.

Weiterhin ist es besonders vorteilhaft, wenn bei einer Dauer des Herstellungsprozesses von weniger als 60 Sekunden die Dauer des Prozesses von Pressen und Entspannen zusammen weniger als 20 Sekunden, insbesondere weniger als 10 Sekunden, beträgt. Insbesondere durch diese kurzzeitige Be- und Entlastung des eingefüllten Schäummaterials wird eine entsprechende Steigerung der Festigkeit erzielt.

Hierbei ist es des Weiteren vorteilhaft, wenn der Abstand der beiden Formplatten beim Pressvorgang auf unter 90%, insbesondere auf 60 bis 80%, des Nennabstandes reduziert wird. Insbesondere bei diesem Grad der Materialpressung wird ein entsprechend positiver Einfluss auf die Materialfestigkeit erreicht.

Zur Realisierung der entsprechenden Pressung des eingefüllten Kunststoffmaterials unter Berücksichtigung der üblichen Zykluszeiten zur Herstellung einer geschäumten Dämmplatte sowie unter Berücksichtung der üblichen Materialdicken von Dämmplatten ist es besonders vorteilhaft, wenn die durchschnittliche Pressgeschwindigkeit mindestens 5mm/s, insbesondere mindestens 15 mm/s, beträgt. Je nach zum Einsatz kommenden Pressantrieb bedeutet dies naheliegend, dass sowohl eine gleichmäßige Pressgeschwindigkeit vorliegen kann, als auch ebenso, insbesondere unter Einsatz einer Kniehebelmechanik, das zu Beginn des Pressvorganges und zum Abschluss des Pressvorganges ein Stillstand der Formplatten vorliegt, wobei eine kontinuierliche Steigerung und Reduzierung der Geschwindigkeit der bewegten Formplatte während des Pressvorganges vorhanden ist. Insofern bezieht sich die durchschnittliche Pressgeschwindigkeit auf die Betrachtung von Beginn des Pressvorganges bis zum Abschluss des Pressvorganges bei vollem Hub und geringster Dicke der Schäumform.

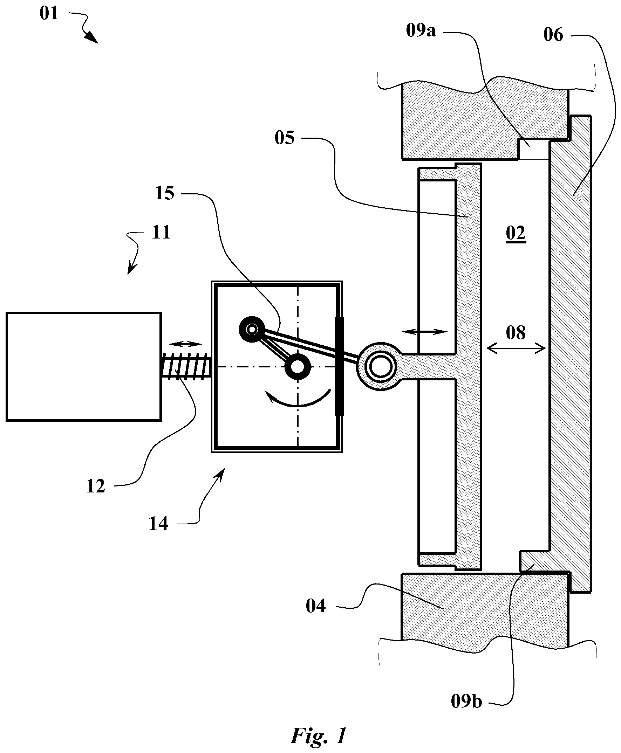

In der nachfolgenden Figur 1 wird eine beispielhafte Ausführungsform einer erfindungsgemäßen Vorrichtung zur Herstellung von geschäumten Dämmplatten skizziert.

In der **Figur 1** ist die Vorrichtung 01 zur Herstellung entsprechender Dämmplatten schematisch skizziert, wobei zunächst einmal die Schäumform 02 als Kavität der Vorrichtung 01 zu erkennen ist. Definiert wird hierbei die Schäumform 02 von den beiden gegenüberliegenden Formplatten 05 bzw. 06. An den umlaufenden Rändern wird die Schäumform 02 geschlossen vom Formrahmen 04. Wie zu erkennen ist, weist hierbei die Schäumform 02 einen Stufenabsatz gebildet durch einen entsprechenden Stufenabsatz 09a im Formrahmen 04 und einen komplementären Stufenabsatz 09b in der Formplatte 06 auf. Hierbei bildet eine Formplatte 06 einen Deckel, welcher zur Entnahme der hergestellten Dämmplatte vom Formrahmen 04 entfernt werden kann. Diesbezügliche Anbindungsmittel oder Halte- oder Schwenkvorrichtungen sind nicht skizziert und hinlänglich aus dem Stand der Technik bekannt.

Maßgeblich für die vorliegende Erfindung ist hingegen die Anordnung einer beweglichen Formplatte, wobei dies in diesem Ausführungsbeispiel die skizzierte Boden-Formplatte 05 ist. Hierbei ist diese Boden-Formplatte 05 innerhalb des Formrahmens 04 verschieblich ausgeführt. Zur Realisierung der erfindungsgemäßen Pressung der im Herstellungsprozess befindlichen Dämmplatte durch Reduzierung des Abstandes 08 zwischen den beiden Formplatten, das heißt einer Reduzierung der Dicke der Schäumform 02, wird eine Pressvorrichtung 14 mit einem Pressantrieb 15 beispielhaft in der Art einer Kniehebelmechanik eingesetzt. Insofern ist es offensichtlich, wie durch Einsatz des Pressantriebes 15 eine Reduktion der Dicke der Schäumform 02 bzw. Reduktion des Abstandes 08 erzielt werden kann.

Weiterhin wird die Vorrichtung 01 ergänzt um eine Verstellvorrichtung 11, welche hierzu einen Verstellantrieb 12 in Art eines Spindelmotors aufweist. Hierbei ist der Verstellantrieb 12 funktionell in Reihe geschaltet mit dem Pressantrieb 15, wobei zum Verstellen des Nennabstandes, das heißt des Abstandes 08 zwischen den beiden Formplatten, in einer Ausgangslage unter Einsatz des Verstellantriebes 12 zugleich der vorhandene Pressantrieb 15 verfahren wird.

## Patentansprüche

1. Vorrichtung (01) zur Herstellung von geschäumten Dämmplatten mit einer einen Boden bildenden Formplatte (06), einer der Boden-Formplatte (06) gegenüberliegenden, einen Deckel bildenden Formplatte (05) und einem zwischen den beiden Formplatten (05, 06) angeordneten Formrahmen (04), wobei die beiden Formplatten (05, 06) und der Formrahmen (04) eine Schäumform (02) bilden, mit einer Verstellvorrichtung (11) mit einem Verstellantrieb (12), wobei durch den Verstellantrieb (12) eine der beiden Formplatten (06) bewegbar ist, wodurch ein Nennabstand der beiden Formplatten (05, 06) einstellbar ist,
**gekennzeichnet durch**
eine Pressvorrichtung (14) mit zumindest einem Pressantrieb (15), welcher (15) während des Herstellungszyklus einer Dämmplatte in der Schäumform (02) eine reversierende Bewegung mindestens einer der Formplatten (05, 06) unter Änderung des relativen Abstands (08) der beiden Formplatten (05, 06) bewirken kann, womit eine reversible Pressung der Dämmplatte einhergeht, und wobei eine der beiden Formplatten (06) relativ zum Formrahmen (04) stehend angeordnet ist und die gegenüberliegende Formplatte (05) durch den Press- (15) und den Verstellantrieb (12) bewegbar ist.

2. Vorrichtung (01) nach Anspruch 1,
**dadurch gekennzeichnet,**
**dass** der Verstellantrieb (12) derart funktionell in Reihe mit dem Pressantrieb (15) angeordnet ist, dass bei einer Verstellung einer Formplatte (05) mittels des Verstellantriebs (12) zugleich der Pressantrieb (15) verfahren wird.

3. Vorrichtung (01) nach Anspruch 1 oder 2,
**dadurch gekennzeichnet,**
**dass** der den Abstand (08) zwischen den beiden Formplatten (05, 06) verändernde Hub des Pressantriebes (15) einstellbar ist.

4. Vorrichtung (01) nach einem der Ansprüche 1 bis 3,
**dadurch gekennzeichnet,**
**dass** der Pressantrieb (15) eine Kniehebelmechanik oder ein Hydraulikzylinder ist.

5. Vorrichtung (01) nach einem der Ansprüche 1 bis 4,
**dadurch gekennzeichnet,**
**dass** der Verstellantrieb (12) ein Spindelmotor mit einer Gewindespindel ist.

6. Vorrichtung (01) nach einem der Ansprüche 1 bis 5,
**dadurch gekennzeichnet,**
**dass** eine der beiden Formplatten durch den Verstellantrieb und die gegenüberliegende zweite Formplatte durch den Pressantrieb bewegbar ist.

7. Vorrichtung (01) nach einem der Ansprüche 1 bis 6,
**dadurch gekennzeichnet,**
**dass** der Verstellantrieb (12) und der Pressantrieb (15) zugleich betrieben werden können.

8. Vorrichtung (01) nach Anspruch 7,
**dadurch gekennzeichnet,**
**dass** ein fixer Hub des Pressantriebs (15) durch einen zeitgleichen Betrieb des Verstellantriebs (12) verkleinert und/oder vergrößert werden kann.

9. Vorrichtung (01) nach einem der Ansprüche 1 bis 8,
**dadurch gekennzeichnet,**
**dass** bei geöffneter Vorrichtung (01) die Pressvorrichtung (14) als Auswerfer für die geschäumte Dämmplatte Verwendung findet.

10. Vorrichtung (01) nach einem der Ansprüche 1 bis 9,
**dadurch gekennzeichnet,**
**dass** am Formrahmen (04) oder an der Boden-Formplatte (05) auf einer Seite oder an zwei angrenzenden Seiten der Schäumform (02) ein
Stufenabsatz (09a) vorhanden ist, wobei in der Deckel-Formplatte (06) auf der gegenüberliegenden Seite bzw. den gegenüberliegenden Seiten der Schäumform (02) ein komplementärer Stufenabsatz (09b) vorhanden ist.

11. Vorrichtung (01) nach Anspruch 10,
**dadurch gekennzeichnet,**
**dass** die Höhe des Stufenabsatzes (09) veränderbar ist.

12. Vorrichtung (01) nach einem der Ansprüche 1 bis 11,
**dadurch gekennzeichnet,**
**dass** zumindest eine der beiden Formplatten (05, 06) auf der zur Schäumform (02) weisenden Fläche eine erhabene und/oder vertiefte Struktur aufweist.

13. Vorrichtung (01) nach Anspruch 12,
**dadurch gekennzeichnet,**
**dass** die Struktur derart ausgebildet ist, dass die als Abdruck in der Dämmplatte gebildete Oberfläche zumindest doppelt so groß ist wie die aus der Abmessung der Formplatte (05, 06) resultierende Fläche und/oder dass sich in der Oberfläche ein maßstäbliches Linienraster abzeichnet.

14. Vorrichtung (01) nach Anspruch 12 oder 13,
**dadurch gekennzeichnet,**
**dass** die Struktur auf den Oberflächen der beiden Formplatten (05, 06) unterschiedlich ist.

15. Verfahren zur Herstellung von Dämmplatten in einer Schäumform (02) einer Schäumvorrichtung (01) wobei die Schäumform (02) von einer den Boden bildenden Formplatte (06) und einer gegenüberliegenden, einen Deckel bildenden Formplatte (05) sowie von einem Formrahmen (07) umschlossen wird, mit folgenden Verfahrensschritten:
- Einfüllen von aufgeschäumtem losem Kunststoffmaterial in die
Schäumform (02);
- Bewegen einer der beiden Formplatten (05) mittels eines Verstellantriebes (12) der-Schäumvorrichtung (01), wodurch ein Nennabstand der beiden Formplatten (05, 06) eingestellt wird,
- Bedampfen des eingefüllten Kunststoffmaterials unter Verbindung des zuvor losen Kunststoffmaterials zu einem Körper; und
- Stabilisieren des bedampften Kunststoffmaterials unter Anlegung eines Vakuums mit Absaugung von Dampf und/oder Luft,
**dadurch gekennzeichnet,**
**dass** die Schäumvorrichtung (01) eine Pressvorrichtung (14) mit zumindest einem Pressantrieb (15) umfasst, wobei nach dem Beginn oder Abschluss des Bedampfens und/oder während des Stabilisierens mittels des Pressantriebs (15) mindestens eine der Formplatte (05, 06) unter Änderung des relativen Abstands (08) der beiden Formplatten (05, 06) reversierend bewegt wird, wobei ein alternierendes Pressen und Entspannen des Kunststoffmaterials erfolgt, wobei eine der beiden Formplatten (06) relativ zum Formrahmen (04) stehend angeordnet ist und die gegenüberliegende Formplatte (05) durch den Press- (15) und den Verstellantrieb (12) bewegt wird.

16. Verfahren nach Anspruch 15,
**dadurch gekennzeichnet,**
**dass** der Verstellantrieb (12) derart funktionell in Reihe mit dem Pressantrieb (15) angeordnet ist, dass bei einer Verstellung einer Formplatte (05) mittels des Verstellantriebs (12) zugleich der Pressantrieb (15) verfahren wird.

17. Verfahren nach Anspruch 16,
**dadurch gekennzeichnet,**
**dass** das Minimum der Dicke der Schäumform (02) nach dem Bedampfen erreicht wird.

18. Verfahren nach Anspruch 16 oder 17,
**dadurch gekennzeichnet,**
**dass** die Dauer des Herstellungsprozesses weniger als 60 Sekunden beträgt, wobei die Dauer des Pressens und Entspannens zusammen weniger als 20 Sekunden beträgt.

## Claims

1. Device (01) for producing foamed insulating panels with a mold plate (06) that forms a bottom, a mold plate (05) opposite the molded bottom plate (06) and forming a cover (05), and a mold frame (04) arranged between the two mold plates (05, 06), wherein the two mold plates (05, 06) and the mold frame (04) form a foaming mold (02), having an adjusting device (11) with an adjusting drive (12), wherein one of the two mold plates (06) is movable by means of the adjusting drive (12), whereby a nominal spacing of the two mold plates (05, 06) can be set,
**characterized by**
a pressing device (14) having at least one pressing drive (15), which (15) during the production cycle of an insulating panel in the foaming mold (02) can cause a reversing movement of at least one of the mold plates (05, 06) while altering the relative spacing (08) of the two mold plates (05, 06), accompanied by a reversible pressing of the insulating panel, and wherein one of the two mold plates (06) is arranged fixedly relative to the mold frame, and the opposite mold plate (05) is movable by means of the pressing- and adjusting drive (12).

2. Device (01) according to claim 1,
**characterized in that**
the adjusting drive (12) is arranged functionally in series with the pressing drive (15), that the pressing drive (15) is moved simultaneously with an adjustment of a mold plate (05, 06) by means of the adjusting drive (12).

3. Device (01) according to claim 1 or 2,
**characterized in that**
the stroke of the pressing drive (15) changing the spacing (08) between the two mold plates (05, 06) is adjustable.

4. Device (01) according to one of claims 1 to 3,
**characterized in that**
the pressing drive (15) is a toggle lever mechanism or a hydraulic cylinder.

5. Device (01) according to one of claims 1 to 4,
**characterized in that**
the adjusting drive (12) is spindle motor having a threaded spindle.

6. Device (01) according to one of claims 1 to 5,
**characterized in that**
one of the two mold plates is movable by means of the adjusting drive and the opposite, second mold plate is drivable by the pressing drive.

7. Device (01) according to one of claims 1 to 6,
**characterized in that**
the adjusting drive (12) and the pressing drive (15) can be operated simultaneously.

8. Device (01) according to claim 7,
**characterized in that**
a fixed stroke of the pressing drive (15) can be increased or decreased by simultaneous operation of the adjustment drive (12).

9. Device (01) according to one of claims 1 to 8,
**characterized in that**
with the device opened (01), the pressing device (14) is used as an ejector for the foamed insulating panel.

10. Device (01) according to one of claims 1 to 9,
**characterized in that**
a step (09a) is present on the mold frame (04) or on the molded bottom plate (05) on one side or on two adjacent sides of the foaming mold (02), wherein a complementary step (09b) is present in the molded cover plate (06) on the opposite side or sides of the foaming mold (02).

11. Device (01) according to claim 10,
**characterized in that**
the height of the step (09) can be changed.

12. Device (01) according to one of claims 1 to 11,
**characterized in that**
at least one of the two mold plates (05, 06) comprises an elevated and/or depressed structure on the surface facing the foaming mold (02).

13. Device (01) according to claim 12,
**characterized in that**
the structure is configured such that the surface formed in the insulating panel as an imprint is at least twice as large as the area resulting from the dimensions of the mold plate (05, 06) and/or **in that** a true-to-scale pattern develops in the surface.

14. Device (01) according to claim 12 or 13,
**characterized in that**
the structure on the surfaces of the two mold plates (05, 06) is different.

15. Method for producing insulating panels in a foaming mold (02) of a foaming device (01), wherein the foaming mold (02) is enclosed by a mold plate (06) constituting the bottom, and an opposite mold plate (05) constituting a cover, as well as by a mold frame (07), the method comprising the following steps:
- filling expanded bulk plastic material into the foaming mold (02);
- moving one of the two mold plates (05) by means of the adjustment drive (12) of the foaming device (01), thereby setting a nominal distance of the two mold plates (05, 06),
- vapor coating of the filled-in plastic material with aggregation of the initially loose plastic material so as to form a body; and
- stabilizing the vapor-coated plastic material by applying a vacuum with suctioning off air and/or vapor,
**characterized in that**
the foaming device (01) includes a pressing device (14) having at least one pressing drive (15), wherein after start or completion of the vapor coating and/or during the stabilizing by means of the pressing drive (15) at least one of the mold plates (05, 06) is moved in a reversing manner while changing the relative distance (08) of the two mold plates (05, 06), wherein an alternating pressing and relaxation of the plastic material occurs, wherein one of the two mold plates (06) is arranged fixedly relative to the mold frame (04), and the opposite mold plate (05) is moved by means of the pressing (15) and adjusting drive (12).

16. Method according to claim 15,
**characterized in that**
the adjusting drive (12) is functionally arranged in series with the pressing drive (15) in such a way, that upon adjustment of a mold plate (05, 06) by means of the adjusting drive (12), the pressing drive (15) is moved at the same time.

17. Method according to claim 16,
**characterized in that**
the minimum of the thickness of the foaming mold (02) is achieved after vapor coating.

18. Method according to claim 16 or 17,
**characterized in that**
the duration of the production process amounts to less than 60 seconds, wherein the duration of the pressing and relaxation together amounts to less than 20 seconds.

## Revendications

1. Dispositif (01) destiné à la fabrication de plaques isolantes en matériau expansé comprenant un plateau-matrice (06) formant un fond, un plateau-matrice (05) formant un couvercle opposé au plateau-matrice (06) formant fond et un châssis de moule (04) disposé entre les deux plateaux-matrices (05, 06), les deux plateaux-matrices (05, 06) et le châssis de moule (04) formant un moule pour matériau expansé (02), comprenant un dispositif de réglage (11) doté d'un entraînement de réglage (12), un des deux plateaux-matrices (06) pouvant être déplacé par l'entraînement de réglage (12), moyennant quoi un écart nominal entre les deux plateaux-matrices (05, 06) peut être réglé,
**caractérisé par**
un dispositif de presse (14) comprenant au moins un entraînement de presse (15), lequel (15) peut effectuer pendant le cycle de fabrication d'une plaque isolante dans le moule pour matériau expansé (02), un mouvement d'inversion d'au moins un des plateaux-matrices (05, 06) en modifiant l'écart (08) relatif entre les deux plateaux-matrices (05, 06), s'accompagnant d'une compression réversible de la plaque isolante, et un des deux plateaux-matrices (06) étant disposé fixe par rapport au châssis de moule (04) et le plateau-matrice (05) opposé étant déplaçable par l'entraînement de presse (15) et de réglage (12).

2. Dispositif (01) selon la revendication 1,
**caractérisé en ce que**
l'entraînement de déplacement (12) est disposé de manière opérationnelle en série avec l'entraînement de presse (15) de telle manière que, lors d'un déplacement d'un plateau-matrice (05) au moyen de l'entraînement de déplacement (12), l'entraînement de presse (15) est déplacé en même temps.

3. Dispositif (01) selon la revendication 1 ou 2,
**caractérisé en ce que**
la course de l'entraînement de presse (15) modifiant l'écart (08) entre les deux plateaux-matrices (05, 06) peut être réglée.

4. Dispositif (01) selon l'une des revendications 1 à 3,
**caractérisé en ce que**
l'entraînement de presse (15) est un mécanisme à grenouillère ou un vérin hydraulique.

5. Dispositif (01) selon l'une des revendications 1 à 4,
**caractérisé en ce que**
l'entraînement de réglage (12) est un moteur de broche avec une broche filetée.

6. Dispositif (01) selon l'une des revendications 1 à 5,
**caractérisé en ce que**
l'un des deux plateaux-matrices est déplaçable par l'entraînement de réglage et le second plateau-matrice opposé est déplaçable par l'entraînement de presse.

7. Dispositif (01) selon l'une des revendications 1 à 6,
**caractérisé en ce que**
l'entraînement de réglage (12) et l'entraînement de presse (15) peuvent fonctionner simultanément.

8. Dispositif (01) selon la revendication 7,
**caractérisé en ce que**
une course fixe de l'entraînement de presse (15) peut être réduite et/ou augmentée par le fonctionnement simultané de l'entraînement de réglage (12).

9. Dispositif (01) selon l'une des revendications 1 à 8,
**caractérisé en ce que**
lorsque le dispositif (01) est ouvert, le dispositif de presse (14) est utilisé comme éjecteur pour la plaque isolante en matériau expansé.

10. Dispositif (01) selon l'une des revendications 1 à 9,
**caractérisé en ce que**
un épaulement (09a) est prévu sur le châssis de moule (04) ou sur le plateau-matrice (05) formant fond sur un côté ou sur deux côtés adjacents du moule pour matériau expansé (02), un épaulement (09b) complémentaire étant prévu dans le plateau-matrice (06) formant couvercle sur le côté opposé ou les côtés opposés du moule pour matériau expansé (02).

11. Dispositif (01) selon la revendication 10,
**caractérisé en ce que**
la hauteur de l'épaulement (09) est variable.

12. Dispositif (01) selon l'une des revendications 1 à 11,
**caractérisé en ce que**
au moins un des deux plateaux-matrices (05, 06) comporte, sur la surface tournée vers le moule pour matériau expansé (02) présente une structure en saillie et/ou en creux.

13. Dispositif (01) selon la revendication 12,
**caractérisé en ce que**
la structure est conçue de telle manière que la surface formée comme empreinte dans la plaque isolante est au moins deux fois plus grande que la superficie résultant de la dimension du plateau-matrice (05, 06) et/ou **en ce qu'**un réseau ligné à l'échelle se forme dans la surface.

14. Dispositif (01) selon la revendication 12 ou 13,
**caractérisé en ce que**
la structure sur les surfaces des deux plateaux-matrices (05, 06) est différente.

15. Procédé destiné à la fabrication de plaques isolantes dans un moule pour matériau expansé (02) d'un dispositif d'expansion (01), le moule pour matériau expansé (02) étant entouré d'un plateau-matrice (06) formant le fond et d'un plateau-matrice (05) opposé formant un couvercle ainsi que d'un châssis de moule (07), le procédé comprenant les étapes de procédé suivantes :
- remplissage de matière plastique expansé en vrac dans le moule pour matériau expansé (02) ;
- déplacement d'un des deux plateaux-matrices (05) au moyen d'un entraînement de déplacement (12) du dispositif d'expansion (01), moyennant quoi un écart nominal entre les deux plateaux-matrices (05, 06) est réglé,
- évaporation de la matière plastique remplie avec liaison de la matière plastique auparavant en vrac en un corps ; et
- stabilisation de la matière plastique évaporée sous vide en appliquant un vide avec aspiration de la vapeur et/ou de l'air,
**caractérisé en ce que**
le dispositif d'expansion (01) comprend un dispositif de presse (14) doté d'au moins un entraînement de presse (15), au moins un des plateaux-matrices (05, 06) étant déplacé en sens inverse en modifiant l'écart (08) relatif entre les deux plateaux-matrices (05, 06) au moyen de l'entraînement de presse (15) après le début ou la fin de l'évaporation sous vide et/ou pendant la stabilisation, une compression et une détente de la matière plastique étant effectuées en alternance, un des deux plateaux-matrices (06) étant disposé fixe par rapport au châssis de moule (04) et le plateau-matrice (05) opposé étant déplacé par l'entraînement de presse (15) et de réglage (12).

16. Procédé selon la revendication 15,
**caractérisé en ce que**
l'entraînement de déplacement (12) est disposé de manière opérationnelle en série avec l'entraînement de presse (15) de telle manière que, lors d'un déplacement d'un plateau-matrice (05) au moyen de l'entraînement de déplacement (12), l'entraînement de presse (15) est déplacé en même temps.

17. Procédé selon la revendication 16,
**caractérisé en ce que**
le minimum de l'épaisseur du moule pour matériau expansé (02) est atteint après l'évaporation sous vide.

18. Procédé selon la revendication 16 ou 17,
**caractérisé en ce que**
la durée du processus de fabrication est inférieure à 60 secondes, la durée de la compression et de la détente ensemble étant inférieure à 20 secondes.
